# EUROPÄISCHE PATENTANMELDUNG

(11) **EP 4 503 404 A1**
(43) Veröffentlichungstag der Anmeldung: **05.02.2025**
(21) Anmeldenummer: 23189031.0
(22) Anmeldetag: 01.08.2023
(51) Int. Cl.: H02K 11/40, H01R 39/38, H01R 39/64

(54) **ABLEITUNGSEINRICHTUNG SOWIE MASCHINE**

(71) Anmelder: Schunk Kohlenstofftechnik GmbH, 35452 Heuchelheim (DE)
(72) Erfinder: Tenev, Miroslav, 97289 Thüngen (DE); Schlichtherle, Johann, 87600 Kaufbeuren (DE); Voges, Michael, 85406 Zolling (DE); Spies, Jürgen, 35428 Langgöns (DE)
(74) Vertreter: advotec.

(57) **Zusammenfassung**

Die Erfindung betrifft eine Ableitungseinrichtung (10) zur Ableitung elektrostatischer Ladung von einer Welle (11), umfassend einen Halter (12), ein an dem Halter angeordnetes Federelement (20) und zumindest einen an dem Federelement angeordneten, sich quer zu einer Wellenlängsachse (17) erstreckenden Leiter (37, 38), wobei der Leiter einen Wellenkontaktabschnitt (39, 40) zur Kontaktierung mit einem Umfangskontaktbereich (41, 42) eines Wellenumfangs (43) aufweist, derart, dass der Wellenkontaktabschnitt bei Kontakt zum Wellenumfang tangential zum Wellenumfang angeordnet ist.

## Beschreibung

Die Erfindung betrifft eine Ableitungseinrichtung zur Ableitung elektrostatischer Ladung von einer Welle. Weiter betrifft die Erfindung eine Maschine, umfassend eine Ableitungseinrichtung.

Eine derartige Ableitungseinrichtung ist aus dem Stand der Technik hinlänglich bekannt und dient zur Ableitung elektrostatischer Ladung bzw. elektrischer Ströme von einer Welle einer Maschine, wodurch eine unerwünschte Stromführung über Lagerstellen der Welle und damit verbundene Lagerschäden vermieden werden kann bzw. können.

Die EP 3 044 840 B1 offenbart eine Ableitungseinrichtung zur Ableitung elektrostatischer Ladung von einer Welle mit einem biegeelastisch ausgebildeten Leiter mit einer Kohlenstofffaseranordnung mit zumindest zwei an einem Halter angeordneten, sich quer zu einer Wellenlängsachse erstreckenden und gegenüber dem Halter isolierten Leiterabschnitten, die über ihre im Halter aufgenommenen Abschnittssenden mit einem Erdungsleiter verbindbar sind, wobei die Leiterabschnitte jeweils einen Wellenkontaktabschnitt aufweisen, und die Wellenkontaktabschnitte zusammen eine Kontaktanordnung zur Kontaktierung mit zwei einander gegenüberliegend in einer Wellenkontaktebene angeordneten Umfangskontaktbereichen eines Wellenumfangs ausbilden, derart, dass die Wellenkontaktabschnitte bei Kontakt zum Wellenumfang tangential zum Wellenumfang angeordnet sind. Dabei sind die Abschnittsenden vorzugsweise über einen Verbindungsabschnitt einstückig miteinander verbunden, wobei der Verbindungsabschnitt zum Anschluss an den Erdungsleiter dient. Aufgrund der biegeelastischen Ausgestaltung der Leiterabschnitte liegen die Wellenkontaktabschnitte mit einer Kontaktkraft in den Umfangskontaktbereichen am Wellenumfang an.

Nachteilhaft bei der vorstehend beschriebenen Ableitungseinrichtung ist, dass die mittels des biegeelastischen Leiters ausbildbare Kontaktkraft regelmäßig nicht ausreichend hoch ist, um eine ausreichende Ableitung von elektrostatischer Ladung von der Welle über die Ableitungseinrichtung zu erreichen, so dass trotz Vorsehen der Ableitungseinrichtung bei einer Maschine Lagerschäden nicht sicher vermieden werden können.

Der vorliegenden Erfindung liegt daher die Aufgabe zugrunde, eine Ableitungseinrichtung und eine Maschine vorzuschlagen, mittels welcher Lagerschäden sicher vermieden werden können.

Diese Aufgabe wird durch eine Ableitungseinrichtung mit den Merkmalen des Anspruchs 1 und eine Maschine mit den Merkmalen des Anspruchs 17 gelöst.

Die erfindungsgemäße Ableitungseinrichtung zur Ableitung elektrostatischer Ladung von einer Welle umfasst einen Halter, ein an dem Halter angeordnetes Federelement und zumindest einen an dem Federelement angeordneten, sich quer zu einer Wellenlängsachse erstreckenden Leiter, wobei der Leiter einen Wellenkontaktabschnitt zur Kontaktierung mit einem Umfangskontaktbereich eines Wellenumfangs aufweist, derart, dass der Wellenkontaktabschnitt bei Kontakt zum Wellenumfang tangential zum Wellenumfang angeordnet ist.

Demnach ist erfindungsgemäß vorgesehen, dass die Ableitungseinrichtung zumindest einen Leiter umfasst, welcher über ein, vorzugsweise einstückig ausgebildetes, Federelement, welches die Ableitungseinrichtung ebenfalls umfasst, an dem Halter angeordnet ist, wobei es durch das Vorsehen des Federelements, insbesondere durch die damit verbundene Möglichkeit, das Federelement zum Erreichen einer gewünschten bzw. ausreichend hohen Rückstellkraft bzw. Kontaktkraft völlig unabhängig von dem Leiter aus einem geeigneten Material auszubilden, möglich wird, dass der Wellenkontaktabschnitt mit einer vergleichsweise höheren Kontaktkraft in dem Umfangskontaktbereich am Wellenumfang anliegt, wodurch stets eine ausreichende Ableitung von elektrostatischer Ladung bzw. elektrischen Strömen von der Welle über die Ableitungseinrichtung ermöglicht wird, so dass Lagerschäden sicher vermieden werden können. Das Federelement ist also zur Ausbildung bzw. Erzeugung einer Kontaktkraft, mit der der Wellenkontaktabschnitt in dem Umfangskontaktbereich am Wellenumfang anliegt, vorgesehen. Der Leiter kann steif oder biegeelastisch ausgebildet sein.

Der Halter kann aus einem elektrisch nicht leitenden Material, insbesondere aus einem Kunststoffmaterial, ausgebildet sein.

In einer bevorzugten Ausführungsform der Ableitungseinrichtung kann die Ableitungseinrichtung zwei an dem Federelement angeordnete, sich quer zu der Wellenlängsachse erstreckende, getrennt voneinander ausgebildete Leiter umfassten, wobei die Leiter jeweils einen Wellenkontaktabschnitt aufweisen können, wobei die Wellenkontaktabschnitte zusammen eine Kontaktanordnung zur Kontaktierung mit zwei einander gegenüberliegend in einer Wellenkontaktebene angeordneten Umfangskontaktbereichen des Wellenumfangs ausbilden können, derart, dass die Wellenkontaktabschnitte bei Kontakt zum Wellenumfang tangential zum Wellenumfang angeordnet sein können. Aufgrund der gedoppelten Ausführung der Leiter bzw. der an einander im Wesentlichen gegenüberliegenden Umfangskontaktbereichen des Wellenumfangs tangential am Wellenumfang anliegenden Wellenkontaktabschnitte funktioniert die Ableitungseinrichtung drehrichtungsunabhängig. Die Ableitungseinrichtung kann auch mehr als zwei Leiter umfassen.

Weiter kann die Ableitungseinrichtung, wenn diese zwei oder mehr Leiter umfasst, für jeden Leiter ein eigenes Federelement umfassen, wobei dann jeder Leiter an einem der Federelemente angeordnet sein kann. Die Ableitungseinrichtung kann dann also zwei oder mehr Federelemente umfassen. Vorzugsweise umfasst die Ableitungseinrichtung jedoch ein einziges Federelement, was eine einfache Ausbildung der Ableitungseinrichtung ermöglicht.

Vorteilhafterweise kann der Halter als eine Platte ausgebildet sein, wodurch die Ableitungseinrichtung kompakt und kostengünstig ausgebildet werden kann. Eine geometrische Form des Halters bzw. der Platte kann grundsätzlich beliebig bzw. geeignet gewählt sein. Die Platte bzw. eine Plattenebene kann sich bei einer Anordnung der Ableitungseinrichtung an einer Maschine bzw. der Welle betrachtet quer zu der Wellenlängsachse erstrecken. Der Leiter bzw. die Leiter kann bzw. können sich dann in einer sich parallel zu der Platte bzw. Plattenebene erstreckenden Ebene erstrecken. Die Wellenkontaktebene kann sich dann also parallel zu der Platte bzw. Plattenebene erstrecken.

In einer bevorzugten Ausführungsform der Ableitungseinrichtung kann der Halter im Querschnitt betrachtet mit einer U-Form ausgebildet sein, wobei der Halter zwei Schenkelabschnitte und einen die Schenkelabschnitte miteinander verbindenden Verbindungsabschnitt aufweisen kann, wobei das Federelement an dem Verbindungsabschnitt angeordnet sein kann. Diese Ausführungsform der Ableitungseinrichtung ist besonders vorteilhaft, wenn zwei Leiter vorgesehen sind. Eine Ausbildung des Halters als U-förmige Platte ermöglicht eine besonders kompakte und kostengünstige Ausbildung der Ableitungseinrichtung sowie einen besonders platzsparenden Einbau der Ableitungseinrichtung. Dabei bietet der Verbindungsabschnitt eine vorteilhafte Möglichkeit, das Federelement an dem Halter zu befestigen. In einer Vorderansicht der Ableitungseinrichtung betrachtet kann sich jeder der Leiter im Wesentlichen über bzw. in Flucht mit bzw. entlang einem der Schenkelabschnitte erstrecken. Weiter kann in jedem Schenkelabschnitt ein Loch ausgebildet sein, wobei die Löcher zur Befestigung der Ableitungseinrichtung bzw. zur Anordnung der Ableitungseinrichtung an der Maschine bzw. Welle dienen können. Anstelle einer U-Form kann der Halter bzw. die Platte beispielsweise auch mit einer V-Form, rechteckigen Form oder Kreisform ausgebildet sein. Ganz allgemein können in dem Halter bzw. der Platte Löcher zur Befestigung der Ableitungseinrichtung bzw. zur Anordnung der Ableitungseinrichtung an der Maschine bzw. Welle ausgebildet sein.

Vorteilhafterweise kann ein von den Schenkelabschnitten und dem Verbindungsabschnitt begrenzter Zwischenraum zum Durchgreifen der Welle ausgebildet sein bzw. von der Welle durchgreifbar sein bzw. bei einer Anordnung der Ableitungseinrichtung an der Maschine bzw. Welle betrachtet von der Welle durchgriffen werden, so dass die Schenkelabschnitte und der Verbindungsabschnitt die Welle umfangseitig abschnittsweise umgeben können, wodurch die Ableitungseinrichtung besonders platzsparend verbaut werden kann. Eine der Welle zugewandte radiale Innenseite des Halters kann dann zumindest abschnittsweise einen kreisförmigen Verlauf aufweisen, also an eine kreisförmige Querschnittsform der Welle angepasst sein. Wenn der Halter bzw. die Platte mit einer rechteckigen Form oder Kreisform ausgebildet ist, kann ein in dem Halter ausgebildeter, vorzugsweise kreisförmiger, Durchgang von der Welle durchgreifbar sein. Wenn eine V-Form für die Platte vorgesehen ist, kann ein von zwei Schenkelabschnitten des Halters begrenzter Zwischenraum von der Welle durchgreifbar sein.

Vorteilhafterweise kann der Halter auf der radialen Innenseite des Halters im Bereich des Verbindungsabschnitts einen zur abschnittsweisen Aufnahme des Federelements vorgesehenen vertieften Bereich aufweisen. Der vertiefte Bereich kann das an dem Verbindungsabschnitt angeordnete Federelement abschnittsweise aufnehmen und dieses so gegen Verschiebungen, insbesondere entlang des Verbindungsabschnitts, sichern.

Vorteilhafterweise kann das Federelement lösbar, vorzugsweise durch Verschrauben, an dem Halter befestigt sein. Auf eine einfache Weise kann das Federelement dann auch ausgetauscht werden. Die Ableitungseinrichtung kann ein Schraubenmittel umfassen, mittels dem das Federelement mit dem Halter verschraubt sein kann. Jedoch sind neben der lösbaren Befestigung auch andere Arten der Befestigung denkbar, beispielsweise durch Nieten oder Verkleben.

Vorteilhafterweise kann das Federelement mittels eines Befestigungsmittels der Ableitungseinrichtung, vorzugsweise des Schraubenmittels, an dem Halter befestigt sein, wobei das Befestigungsmittel bzw. Schraubenmittel weiter zur Befestigung eines Erdungsleiters an dem Federelement vorgesehen sein kann. Das Befestigungsmittel bzw. Schraubenmittel kann dann gleichzeitig zur Befestigung des Federelements an dem Halter und zur Befestigung des Erdungsleiters an dem Federelement dienen, so dass kein gesondertes Befestigungsmittel für die Befestigung des Erdungsleiters an dem Federelement erforderlich ist.

Vorteilhafterweise kann das Federelement aus einem elektrisch leitenden Material bzw. einem Metall ausgebildet sein. An dem Federelement kann dann der Erdungsleiter angeschlossen werden, so dass die elektrostatische Ladung von dem Leiter bzw. den Leitern über das Federelement zu dem Erdungsleiter gelangen kann. Der Erdungsleiter kann unter Verwendung des Befestigungsmittels bzw. Schraubenmittels an dem Federelement angeschlossen werden, welches auch zur Befestigung des Federelements an dem Halter dienen kann. Alternativ kann vorgesehen sein, den Erdungsleiter über einen bzw. eine an dem Federelement befestigten bzw. angeschlossenen bzw. befestigte bzw. angeschlossene Kabelschuh bzw. Anschlussbuchse der Ableitungseinrichtung an dem Federelement anzuschließen oder den Erdungsleiter durch Anlöten an dem Federelement anzuschließen. Wenn das Federelement aus einem elektrisch nicht leitenden Material ausgebildet ist, kann der Erdungsleiter an beiden Leitern angeschlossen werden.

Vorteilhafterweise kann das Federelement einen Grundabschnitt und zumindest einen, vorzugsweise zwei, vorzugsweise schräg, von dem Grundabschnitt abragenden, vorzugsweise armartigen, Federabschnitt aufweisen, wobei an dem Federabschnitt der Leiter befestigt sein kann. Zur Befestigung des Federelements an dem Halter kann der Grundabschnitt, welcher im Wesentlichen auf einer Vorderseite der Ableitungseinrichtung an dem Verbindungsabschnitt angeordnet sein kann, mittels des Schraubenmittels, welches ein in dem Grundabschnitt ausgebildetes Loch und ein in dem Verbindungsabschnitt ausgebildetes Loch durchgreifen kann, mit dem Verbindungsabschnitt verschraubt sein. Das in dem Verbindungsabschnitt ausgebildete Loch kann zusammen mit den in den Schenkelabschnitten ausgebildeten Löchern auch zur Anordnung der Ableitungseinrichtung an der Maschine bzw. Welle dienen. Wenn die Ableitungseinrichtung zwei Leiter umfasst, kann das Federelement zwei, vorzugsweise schräg, von dem Grundabschnitt abragende, vorzugsweise armartige, Federabschnitte aufweisen, wobei an jedem Federabschnitt einer der Leiter befestigt sein kann. Über die, vorzugsweise armartigen, Federarmschnitte kann auf jeden Leiter im Wesentlichen unabhängig voneinander eine Kraft ausgeübt werden.

Vorteilhafterweise kann der bzw. jeder Federabschnitt eine Befestigungsaufnahme zur Befestigung des Leiters bzw. eines der Leiter aufweisen. Mit einem Endabschnitt des Leiters bzw. Endabschnitten der Leiter kann der Leiter bzw. können die Leiter dann in die Befestigungsaufnahmen eingeführt und darin befestigt werden, vorzugsweise durch plastische Verformung bzw. Crimpen der Befestigungsaufnahmen zusammen mit den Endabschnitten.

Vorteilhafterweise kann das Federelement aus einem elastischen Material, vorzugsweise aus einem Federblech, ausgebildet sein. Durch entsprechendes Zuschneiden und Biegen kann das Federelement dann ganz einfach einstückig und mit einer gewünschten Geometrie ausgebildet werden. Eine gewünschte bzw. ausreichend hohe Kontaktkraft kann sich ganz einfach aus einer geeigneten Wahl eines Materials, insbesondere des Federblechs, und/oder einer Materialdicke ergeben.

Vorteilhafterweise kann der Leiter bzw. können die Leiter durch plastische Verformung, vorzugsweise Crimpen, an dem Federelement befestigt sein. Diese Art der Befestigung ist nicht nur einfach, sondern gewährleistet auch eine sichere Befestigung bei gleichzeitig guter elektrischer Kontaktierung zwischen dem Federelement bzw. den Befestigungshülsen und dem Leiter bzw. den Leitern. Auch eine Befestigung durch eine Pressverbindung oder Quetschverbindung ist denkbar.

Der Leiter bzw. die Leiter kann bzw. können überwiegend mit bzw. aus Kohlenstoff ausgebildet sein.

In einer bevorzugten Ausführungsform der Ableitungseinrichtung kann der Leiter bzw. können die Leiter mit bzw. aus Kohlenstofffasern ausgebildet sein. Die Kohlenstofffasern können in eine Harzmatrix eingebettet sein. Weiter können die Kohlenstoffasern mit einer Beschichtung aus pyrolytischem Kohlenstoff versehen sein, welche nicht nur dazu dienen kann, eine Kontaktoberfläche des Leiters bzw. der Leiter zu verdichten, sondern auch eine die Kohlenstofffasern abstützende Hülle auszubilden. Die Ausbildung der Beschichtung kann beispielsweise mittels eines CVI (Chemical Vapor Infiltration)-Verfahrens erfolgen. Der Leiter bzw. die Leiter kann bzw. können dann insbesondere mit bzw. aus Kohlenstofffaserstäben, Kohlenstofffasermatten, Kohlenstofffasergeflechten, Kohlenstofffaserfolien oder dergleichen ausgebildet sein. Anstelle von Kohlenstofffasern ist auch ein geeignetes Metall, wie Kupfer oder Messing, denkbar. Auch Kohlenstoff-Metall-Mischungen sind denkbar. Ferner ist auch irgendein anderes geeignetes elektrisch leitendes Material denkbar. Beispielsweise ist es denkbar, den Leiter bzw. die Leiter aus einem mit einem elektrisch leitenden Material gefüllten Kunststoff auszubilden. Grundsätzlich muss das Material, mit bzw. aus dem der Leiter bzw. die Leiter ausgebildet ist bzw. sind, zum Ableiten der elektrostatischen Ladung geeignet sein.

Vorteilhafterweise kann der Leiter bzw. können die Leiter länglich, vorzugsweise stabförmig, ausgebildet sein. Der Wellenkontaktabschnitt bzw. die Wellenkontaktabschnitte weist bzw. weisen dann eine vergleichsweise große Oberfläche auf, wodurch die Ableitung der elektrostatischen Ladung erhöht werden kann.

Vorteilhafterweise können, wenn die Ableitungseinrichtung zwei Leiter umfasst, die Leiter bzw. Leiterlängsachsen relativ zueinander schräg bzw. nicht parallel angeordnet sein. Grundsätzlich wäre jedoch auch eine parallele Anordnung der Leiter denkbar.

Vorteilhafterweise kann die Ableitungseinrichtung derart ausgebildet sein, dass in einer Vorderansicht der Ableitungseinrichtung betrachtet der Halter bzw. eine Außenseite des Halters den Leiter bzw. die Leiter in einer radialen Richtung allseitig überragt, so dass der Leiter bzw. die Leiter den Halter radial außen nicht überragt bzw. überragen, wodurch die Ableitungseinrichtung noch kompakter ausgebildet werden kann.

Die erfindungsgemäße Maschine umfasst eine erfindungsgemäße Ableitungseinrichtung. Die Maschine kann eine Welle umfassen.

Nachfolgend wird eine bevorzugte Ausführungsform der Erfindung unter Bezugnahme auf die beigefügten Zeichnungen näher erläutert.

Es zeigen:
- **Fig. 1**: eine Vorderansicht einer Ableitungseinrichtung;
- **Fig. 2**: eine perspektivische Vorderansicht der Ableitungseinrichtung schräg von einer Seite;
- **Fig. 3**: eine Schnittansicht der Ableitungseinrichtung entlang einer in der **Fig. 1** gezeigten Linie A-A;
- **Fig. 4**: eine perspektivische Rückansicht der Ableitungseinrichtung schräg von unten;
- **Fig. 5**: eine perspektivische Rückansicht der Ableitungseinrichtung;
- **Fig. 6**: eine perspektivische Vorderansicht der Ableitungseinrichtung;
- **Fig. 7**: eine Untersicht der Ableitungseinrichtung;
- **Fig. 8**: eine Vorderansicht der Ableitungseinrichtung;
- **Fig. 9**: eine Seitenansicht der Ableitungseinrichtung;
- **Fig. 10**: eine perspektivische Vorderansicht der Ableitungseinrichtung schräg von einer anderen Seite;
- **Fig. 11**: eine Vorderansicht eines Halters der Ableitungseinrichtung;
- **Fig. 12**: eine perspektivische Vorderansicht des Halters schräg von einer Seite;
- **Fig. 13**: eine Vorderansicht eines Federelements der Ableitungseinrichtung;
- **Fig. 14**: eine Schnittansicht des Federelements entlang einer in der **Fig. 13** gezeigten Linie A-A;
- **Fig. 15**: eine Untersicht des Federelements;
- **Fig. 16**: eine Teilansicht des Federelements.

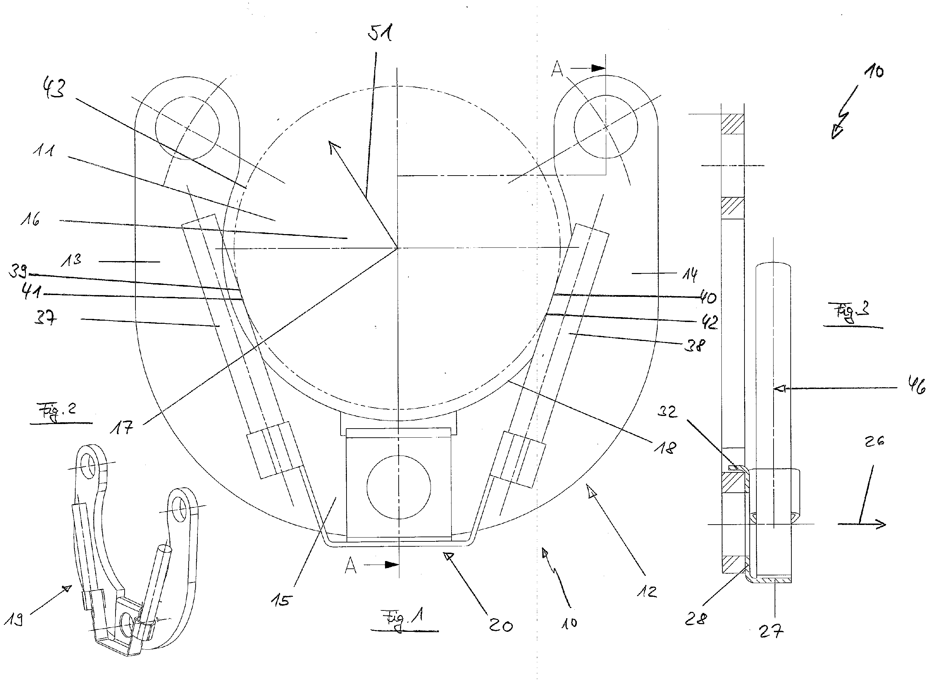

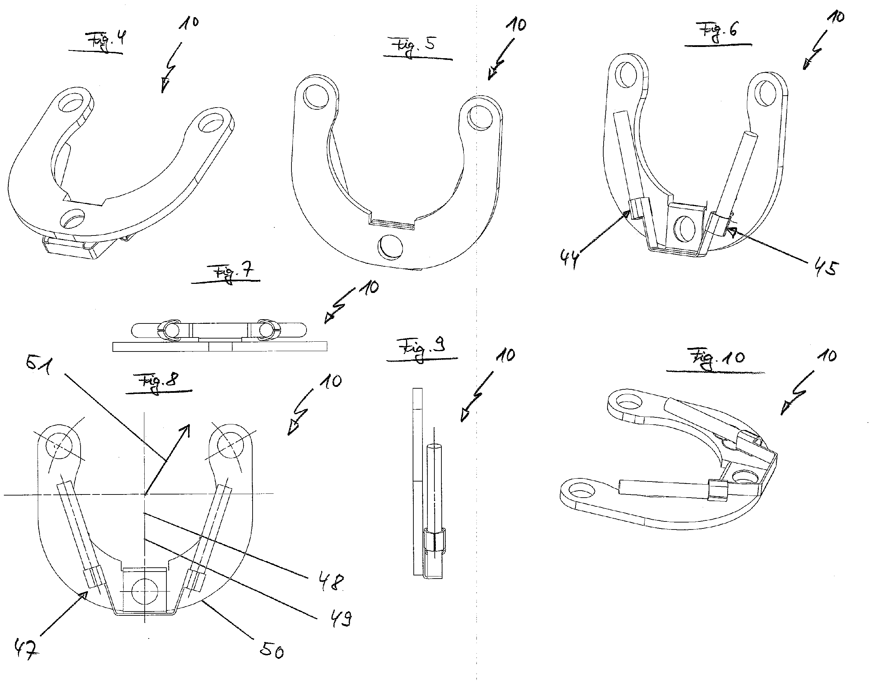

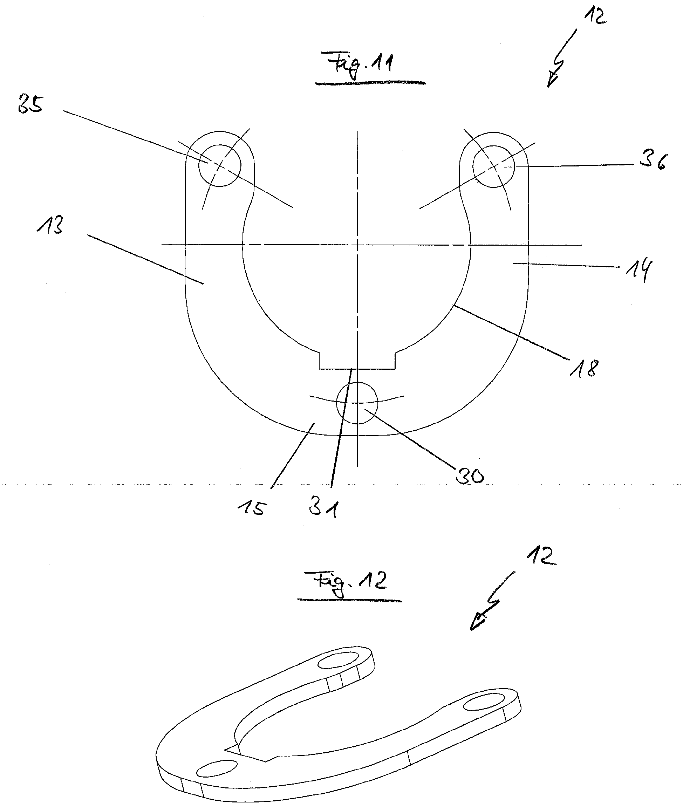

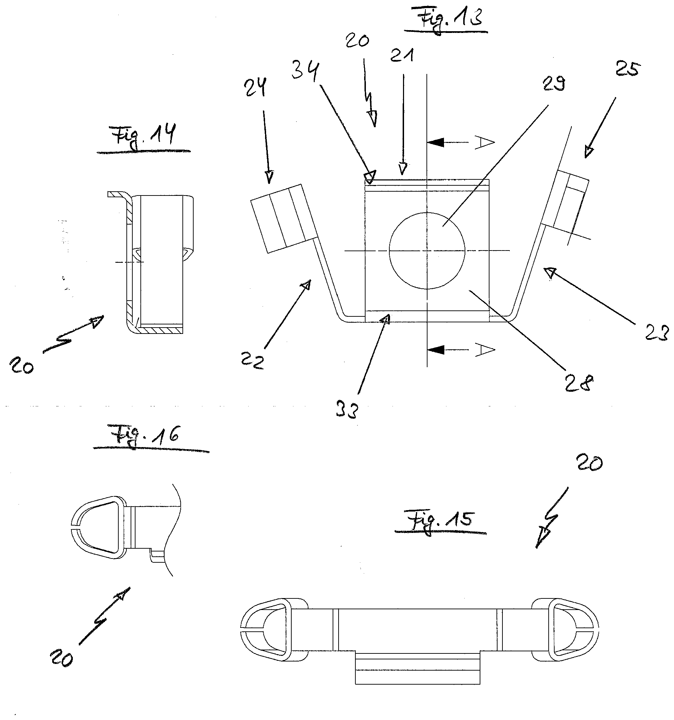

Eine Zusammenschau der **Fig. 1** bis **16** zeigt eine Ableitungseinrichtung 10 zur Ableitung elektrostatischer Ladung von einer Welle 11, welche in der **Fig. 1** lediglich durch eine gestrichelte Linie angedeutet ist. Die Ableitungseinrichtung 10 umfasst einen aus einem elektrisch nicht leitenden Material ausgebildeten und als eine im Querschnitt betrachtet U-förmige Platte ausgebildeten Halter 12, welcher zwei Schenkelabschnitte 13, 14 und einen die Schenkelabschnitte 13, 14 miteinander verbindenden Verbindungsabschnitt 15 ausbildet. Ein von den Schenkelabschnitten 13, 14 und dem Verbindungsabschnitt 15 begrenzter Zwischenraum 16 kann bei dem sich bei einer Anordnung der Ableitungseinrichtung 10 an der Welle 11 bzw. einer die Welle 11 umfassenden Maschine betrachtet quer zu einer Wellenlängsachse 17 erstreckenden Halter 12 von der Welle 11 durchgriffen werden, so dass die Schenkelabschnitte 13, 14 und der Verbindungsabschnitt 15 die Welle 11 umfangseitig abschnittsweise umgeben. Eine radiale Innenseite 18 des Halters 12 weist abschnittsweise einen kreisförmigen Verlauf auf. Weiter umfasst die Ableitungseinrichtung 10 ein im Wesentlichen an einer Vorderseite 19 der Ableitungseinrichtung 10 an dem Halter 12 angeordnetes und aus einem elektrisch leitenden Federblech einstückig ausgebildetes Federelement 20, welches einen Grundabschnitt 21 und zwei einander entgegengesetzt, schräg von dem Grundabschnitt 21 abragende, armartige Federabschnitte 22, 23 ausbildet, welche endseitig Befestigungsaufnahmen 24, 25 aufweisen. Konkret ragen die Federabschnitte 22, 23 von einem in einer parallel zu der Wellenlängsachse 17 verlaufenden axialen Richtung 26 über einen Mittelabschnitt 28 des Grundabschnitts 21 vorspringenden ersten Seitenabschnitt 27 des Grundabschnitts 21 ab, wobei die Federabschnitte 22, 23 an den ersten Seitenabschnitt 27 angeformt sind. Zur Befestigung des Federelements 20 an dem Halter 12 ist der auf der Vorderseite 19 auf dem Verbindungsabschnitt 15 angeordnete Mittelabschnitt 28 mittels eines hier nicht gezeigten Schraubenmittels, welches ein in dem Mittelabschnitt 28 ausgebildetes Loch 29 und ein in dem Verbindungsabschnitt 15 ausgebildetes Loch 30 durchgreift, mit dem Verbindungsabschnitt 15 verschraubt. Die radiale Innenseite 18 bildet im Bereich des Verbindungsabschnitts 15 einen vertieften Bereich 31 aus, um einen entgegen der axialen Richtung 26 über den Mittelabschnitt 28 vorspringenden zweiten Seitenabschnitt 32 des Grundabschnitts 21 aufzunehmen, so dass das Federelement 20 gegen Verschiebungen, insbesondere entlang des Verbindungsabschnitts 15, gesichert ist. Der erste Seitenabschnitt 27 ist an einer Seite 33 des Mittelabschnitts 28 an dem Mittelabschnitt 28 angeformt, welcher einer Seite 34 des Mittelabschnitts 28, an welcher der zweite Seitenabschnitt 32 an dem Mittelabschnitt 28 angeformt ist, gegenüberliegt. Der Grundabschnitt 21 ist im Querschnitt betrachtet Z-förmig ausgebildet. Mittels des Schraubenmittels kann außerdem ein hier nicht gezeigter Erdungsleiter an dem Federelement 20 befestigt bzw. angeschlossen werden. Ferner ist in jedem Schenkelabschnitt 13, 14 endseitig ein Loch 35, 36 ausgebildet, wobei die Löcher 35, 36 zusammen mit dem Loch 30 zur Befestigung der Ableitungseinrichtung 10 dienen. Weiter umfasst die Ableitungseinrichtung 10 zwei an dem Federelement 20 angeordnete, stabförmige, überwiegend aus Kohlenstoff, mit Kohlenstofffasern ausgebildete, sich bei einer Anordnung der Ableitungseinrichtung 10 an der Welle 11 bzw. der Maschine betrachtet quer zu der Wellenlängsachse 17 erstreckende Leiter 37, 38, wobei die Leiter 37, 38 jeweils einen Wellenkontaktabschnitt 39, 40 aufweisen, wobei die Wellenkontaktabschnitte 39, 40 zusammen eine Kontaktanordnung zur Kontaktierung mit zwei einander gegenüberliegend angeordneten Umfangskontaktbereichen 41, 42 eines Wellenumfangs 43 ausbilden, derart, dass die Wellenkontaktabschnitte 39, 40 bei Kontakt zum Wellenumfang 43 tangential zum Wellenumfang 43 angeordnet sind. Der Wellenumfang 43 und die Umfangskontaktbereiche 41, 42 sind ebenfalls als Teil der gestrichelten Linie durch die gestrichelte Linie angedeutet. Jeder der Leiter 37, 38 ist mit einem Endabschnitt 44, 45 in eine der Befestigungshülsen 24, 25 aufgenommen und durch plastische Verformung bzw. Crimpen der Befestigungshülse 24, 25 zusammen mit dem Endabschnitt 44, 45 an dem jeweiligen Federabschnitt 22, 23 befestigt. Die Leiter 37, 38 erstrecken sich auf der Vorderseite 19 in einer sich parallel zu dem Halter 12 erstreckenden Ebene 46. In einer Vorderansicht der Ableitungseinrichtung 10 betrachtet erstreckt sich jeder der Leiter 37, 38 im Wesentlichen über bzw. in Flucht mit bzw. entlang einem der Schenkelabschnitte 13, 14. Dabei sind die relativ zueinander schräg angeordneten Leiter 37, 38 in einer trapezartigen Anordnung 47 angeordnet und erstrecken sich von dem Halter 12 beabstandet über dem Halter 12. Eine Symmetrieachse 48 der trapezartigen Anordnung 47 fluchtet mit einer Symmetrieachse 49 des Halters 12. Zudem überragt eine radiale Außenseite 50 des Halters 12 die Leiter 37, 38 in einer sich quer zu der Wellenlängsachse 17 erstreckenden radialen Richtung 51 allseitig in der Vorderansicht betrachtet.

## Patentansprüche

1. Ableitungseinrichtung (10) zur Ableitung elektrostatischer Ladung von einer Welle (11), umfassend einen Halter (12), ein an dem Halter angeordnetes Federelement (20) und zumindest einen an dem Federelement angeordneten, sich quer zu einer Wellenlängsachse (17) erstreckenden Leiter (37, 38), wobei der Leiter einen Wellenkontaktabschnitt (39, 40) zur Kontaktierung mit einem Umfangskontaktbereich (41, 42) eines Wellenumfangs (43) aufweist, derart, dass der Wellenkontaktabschnitt bei Kontakt zum Wellenumfang tangential zum Wellenumfang angeordnet ist.

2. Ableitungseinrichtung nach Anspruch 1,
**dadurch gekennzeichnet,**
**dass** die Ableitungseinrichtung (10) zwei an dem Federelement (20) angeordnete, sich quer zu der Wellenlängsachse (17) erstreckende Leiter (37, 38) umfasst, wobei die Leiter jeweils einen Wellenkontaktabschnitt (39, 40) aufweisen, wobei die Wellenkontaktabschnitte zusammen eine Kontaktanordnung zur Kontaktierung mit zwei einander gegenüberliegend in einer Wellenkontaktebene angeordneten Umfangskontaktbereichen (41, 42) des Wellenumfangs (43) ausbilden, derart, dass die Wellenkontaktabschnitte bei Kontakt zum Wellenumfang tangential zum Wellenumfang angeordnet sind.

3. Ableitungseinrichtung nach Anspruch 1 oder 2,
**dadurch gekennzeichnet,**
**dass** der Halter (12) als eine Platte ausgebildet ist.

4. Ableitungseinrichtung nach einem der vorangehenden Ansprüche ,
**dadurch gekennzeichnet,**
**dass** der Halter (12) im Querschnitt betrachtet mit einer U-Form ausgebildet ist, wobei der Halter zwei Schenkelabschnitte (13, 14) und einen die Schenkelabschnitte miteinander verbindenden Verbindungsabschnitt (15) aufweist, wobei das Federelement (20) an dem Verbindungsabschnitt angeordnet ist.

5. Ableitungseinrichtung nach Anspruch 4,
**dadurch gekennzeichnet,**
**dass** ein von den Schenkelabschnitten (13, 14) und dem Verbindungsabschnitt (15) begrenzter Zwischenraum (16) zum Durchgreifen der Welle (11) ausgebildet ist.

6. Ableitungseinrichtung nach Anspruch 4 oder 5,
**dadurch gekennzeichnet,**
**dass** der Halter (12) auf einer radialen Innenseite (18) des Halters im Bereich des Verbindungsabschnitts (15) einen zur abschnittsweisen Aufnahme des Federelements (20) vorgesehenen vertieften Bereich (31) aufweist.

7. Ableitungseinrichtung nach einem der vorangehenden Ansprüche,
**dadurch gekennzeichnet,**
**dass** das Federelement (20) lösbar, vorzugsweise durch Verschrauben, an dem Halter (12) befestigt ist.

8. Ableitungseinrichtung nach einem der vorangehenden Ansprüche,
**dadurch gekennzeichnet,**
**dass** das Federelement (20) mittels eines Befestigungsmittels, vorzugsweise eines Schraubenmittels, der Ableitungseinrichtung (10) an dem Halter (12) befestigt ist, wobei das Befestigungsmittel weiter zur Befestigung eines Erdungsleiters an dem Federelement vorgesehen ist.

9. Ableitungseinrichtung nach einem der vorangehenden Ansprüche,
**dadurch gekennzeichnet,**
**dass** das Federelement (20) aus einem elektrisch leitenden Material ausgebildet ist.

10. Ableitungseinrichtung nach einem der vorangehenden Ansprüche,
**dadurch gekennzeichnet,**
**dass** das Federelement (20) einen Grundabschnitt (21) und zumindest einen, vorzugsweise zwei, vorzugsweise schräg, von dem Grundabschnitt abragenden, vorzugsweise armartigen, Federabschnitt (22, 23) aufweist, wobei an dem Federabschnitt der Leiter (37, 38) befestigt ist.

11. Ableitungseinrichtung nach Anspruch 10,
**dadurch gekennzeichnet,**
**dass** der Federabschnitt (22, 23) eine Befestigungsaufnahme (24, 25) zur Befestigung des Leiters (37, 38) aufweist.

12. Ableitungseinrichtung nach einem der vorangehenden Ansprüche,
**dadurch gekennzeichnet,**
**dass** das Federelement (20) aus einem elastischen Material, vorzugsweise aus einem Federblech, ausgebildet ist.

13. Ableitungseinrichtung nach einem der vorangehenden Ansprüche,
**dadurch gekennzeichnet,**
**dass** der Leiter (37, 38) durch plastische Verformung, vorzugsweise Crimpen, an dem Federelement (20) befestigt ist.

14. Ableitungseinrichtung nach einem der vorangehenden Ansprüche,
**dadurch gekennzeichnet,**
**dass** der Leiter (37, 38) mit Kohlenstofffasern ausgebildet ist.

15. Ableitungseinrichtung nach einem der vorangehenden Ansprüche,
**dadurch gekennzeichnet,**
**dass** der Leiter (37, 38) länglich, vorzugsweise stabförmig, ausgebildet ist.

16. Ableitungseinrichtung zumindest nach Anspruch 2 und 15,
**dadurch gekennzeichnet,**
**dass** die Leiter (37, 38) relativ zueinander schräg angeordnet sind.

17. Maschine, umfassend eine Ableitungseinrichtung (10) nach einem der vorangehenden Ansprüche.
